# EUROPEAN PATENT APPLICATION

(11) **EP 3 174 194 A1**
(43) Date of publication of application: **31.05.2017**
(21) Application number: 15825372.4
(22) Date of filing: 16.07.2015
(51) Int. Cl.: H02P 9/08

(54) **GENERATOR**

(30) Priority: 24.07.2014 JP 2014150442; 24.07.2014 JP 2014150684; 11.08.2014 JP 2014163438
(71) Applicant: NTN Corporation, Osaka-shi, Osaka 550-0003 (JP)
(72) Inventor: MIZUTANI, Masatoshi, Kuwana-shi Mie 511-8678 (JP); NODA, Hiroyuki, Kuwana-shi Mie 511-8678 (JP); MORI, Natsuhiko, Kuwana-shi Mie 511-8678 (JP); KARASAWA, Ryousuke, Kuwana-shi Mie 511-8678 (JP); GOTO, Tomomi, Kuwana-shi Mie 511-8678 (JP); SHIMURA, Yuuki, Kuwana-shi Mie 511-8678 (JP)
(74) Representative: Maikowski & Ninnemann Patentanwälte Partnerschaft mbB
(86) International application number: PCT/JP2015/070375
(87) International publication number: WO 2016/013477

(57) **Abstract**

A power generator includes: an output iron core having an output winding wound therearound; and a field iron core having a main field winding and an auxiliary field winding wound therearound, and is a self-excitation type in which one of the output iron core and the field iron core serves as a stator and the other serves as a rotor, the main field windin is connected to a first rectifying element, the auxiliary field winding is connected to a second rectifying element, and power is generated by relative rotation of the stator and the rotor. The power generator is provided with an initial excitation unit configured to apply, to one or both of the output iron core and the field iron core, a magnetic force to a degree required for initial excitation in power generation.

## Description

### CROSS REFERENCE TO THE RELATED APPLICATION

This application is based on and claims Convention priority to Japanese patent application No. 2014-150442, filed July 24, 2014, Japanese patent application No. 2014-150684, filed July 24, 2014, and Japanese patent application No. 2014-163438, filed August 11, 2014, the entire disclosures of which are herein incorporated by reference as a part of this application.

### BACKGROUND OF THE INVENTION

### (Field of the Invention)

The present invention relates to a permanent-magnet-less power generator used as a small-sized wind power generator or a power generator using flowing water, for example.

### (Description of Related Art)

Examples of power generators that generate power by rotation include induction power generators and synchronous power generators. Although an induction power generator does not need to excite the windings of the rotor thereof, the induction power generator needs to perform system interconnection and needs to be rotated at a high rotational speed, and thus is not suited for a small-sized power generator. Accordingly, for small-sized wind power generators, etc., synchronous power generators are often used.

However, an ordinary synchronous power generator uses a permanent magnet to generate a magnetic field. Since rare metal which is a component of a permanent magnet is expensive, the total price of such a power generator is high. Furthermore, in synchronous power generators, cogging is generated at a time of starting, and starting torque becomes large due to the cogging torque. Thus, synchronous power generators are not suited for power generators such as small-sized wind power generators which generate power using a small amount of nature power. Some synchronous power generators are separately excited by using electromagnets instead of permanent magnets. However, such a power generator requires a configuration for supplying power from the outside to the electromagnet, and the configuration becomes complicated due to an external power source.

A self-excitation type synchronous power generator has been proposed which solves these problems and does not need a permanent magnet or power supply from the outside (Patent Document 1). The power generator increases current flowing through a field winding, by self-excitation using the residual magnetism of a core, and thereby generates a magnetic flux required for power generation, without requiring any expensive permanent magnet or any external power source for excitation.

In addition, as a power generator which solves the above problems, a reluctance power generator has been proposed which uses reluctance (magnetic resistance), has an output winding and a field winding wound around a stator core, and has a rotor without a coil, wherein a ferrite magnet for magnetically short-circuiting between salient poles of the stator is provided (Patent Document 2).

### [Related Document]

### [Patent Document]

[Patent Document 1] JP Laid-open Patent Publication No. 2006-149148
[Patent Document 2] JP Laid-open Patent Publication No. 2011-259633

### SUMMARY OF THE INVENTION

The self-excitation type power generator of Patent Document 1 has the aforementioned great advantages. However, when power generation is stopped or the power generator is disassembled, the residual magnetism of the power generator core is weakened. When the residual magnetism of the power generator core is weak, a magnetic force required for initial excitation is insufficient, and thus, power generation is not started, or the rotational speed for starting power generation needs to become high to some extent. Therefore, in a power generating system such as wind power generation or power generation using flowing water, in which a stop time period is generated or power needs to be generated at a low speed, the self-excitation type power generator cannot provide sufficient reliability of starting power generation.

The power generator of Patent Document 2 achieves the reliability of starting power generation at a restart of rotation after stop of rotation. However, reluctance power generators have been rarely put into practical use, and there are some worries about the practical use thereof.

An object of the present invention is to provide a power generator that does not require a permanent magnet for generating a magnetic flux to obtain an ordinary generation power and does not require power supply for separate excitation from the outside, and that can reliably start power generation by restart of rotation after stop of rotation.

A power generator according to the present invention includes: an output iron core having an output winding wound therearound; and a field iron core having a main field winding and an auxiliary field winding wound therearound. The power generator is of a self-excitation type in which one of the output iron core and the field iron core serves as a stator and the other serves as a rotor, the main field winding is connected to a first rectifying element, the auxiliary field winding is connected to a second rectifying element, and power is generated by relative rotation of the stator and the rotor.

The power generator is provided with an initial excitation unit configured to apply, to one or both of the output iron core and the field iron core, a magnetic force to a degree required for initial excitation in power generation.

With this configuration, since the power generator is a self-excitation type which performs excitation using the auxiliary field winding, power generation can be performed without requiring a permanent magnet for power generation or an external power source for supplying power for separate excitation from the outside. Since no permanent magnet is used, no cogging torque is generated, and thus, the rotor can be rotated with small torque. Since the power generator is a self-excitation type but is provided with the initial excitation unit, power generation can be reliably started even after stop of rotation or disassembly for maintenance, and further even when the rotational speed is low.

Although the initial excitation unit is provided, an extremely small magnetic force is enough for initial excitation because a magnetic flux increases with rotation in a self-excitation power generator. Accordingly, simple means is enough as the initial excitation unit, whether the initial excitation unit is magnetization unit described below or a permanent magnet.

In one embodiment of the present invention, a magnetization unit may be provided which magnetizes one or both of the output iron core and the field iron core. The term "magnetize" means performing magnetization such that residual magnetism is generated after a magnetization process is completed.

An extremely small magnetic force is enough for initial excitation because a magnetic flux increases with rotation in a self-excitation power generator, as described above. Accordingly, the magnetization unit only needs to perform magnetization to a degree enabling generation of a magnetic force required for initial excitation in power generation. Thus, the magnetization unit may be much smaller than external power sources for separately-excited type power generators.

The magnetization unit may be configured to apply magnetization current to any of the output winding, the main field winding, and the auxiliary field winding. As a result of applying current of a certain magnitude or more to a winding, magnetization can be performed on the cores. When the magnetization unit is configured to apply magnetization current to a winding, the magnetization unit may have a simple configuration.

The magnetization current may be direct current, or may be pulse current. When the magnetization current is direct current, the magnetization unit may have a simpler configuration. If the magnetization current is pulse current, strong current required for magnetization can be easily applied temporarily, or the magnitude of magnetization current can be easily adjusted.

The magnetization unit configured to apply magnetization current to the windings, may include: a magnetization power source formed of a secondary battery or a capacitor; and a switching element interposed either between the magnetization power source and the output winding to which the magnetization current is applied, or between the magnetization power source, and the main field winding and the auxiliary field winding to which the magnetization current is applied. With this configuration, the magnetization unit may have a simple configuration.

In one embodiment of the present invention, the initial excitation unit may be an initial excitation magnet in the form of a permanent magnet which is provided in the field iron core and which generates a magnetic force required for initial excitation in power generation.

When the initial excitation unit is an initial excitation magnet formed of a permanent magnet, a circuit as in the magnetization unit is not needed, and the circuit configuration becomes simple. Although the initial excitation magnet is provided, an extremely small magnetic force is enough for initial excitation because a magnetic flux increases with rotation in a self-excitation power generator, as described above. Since the initial excitation magnet is a permanent magnet which generates a magnetic force required for initial excitation, the permanent magnet may be one which generates a magnetic force much weaker than permanent magnets that provide ordinary generation power. Accordingly, expensive rare metal is not needed, an inexpensive material such as a ferrite magnet is enough, a small magnet is enough, and the cogging torque does not become a practical problem.

The power generator is an improved self-excitation type, and thus, can be easily put into practical use, unlike reluctance power generators.

In one embodiment of the present invention, the initial excitation magnet may be embedded in a surface, on a magnetic pole segment of the field iron core, facing the output iron core, or may be embedded between adjacent magnetic pole segments of the field iron core. As a result of the initial excitation magnet being embedded in the surface facing the output iron core or between the magnetic poles in this way, a magnetic force generated by the initial excitation magnet is efficiently used in initial excitation at a start of rotation.

In a case where the field iron core is provided with the initial excitation magnet, the direction of a magnetic flux generated by the initial excitation magnet may be same as the direction of a magnetic flux generated by excitation current flowing through the main field winding.

As a result of making the directions of magnetic fluxes same, a magnetic force generated by the initial excitation magnet is efficiently used in initial excitation at a start of rotation.

According to an embodiment of the present invention, the power generator may be configured as a power generator for wind power generation, in which the rotor is rotationally driven by a wind turbine.

In this way, rotation can be started even with small torque, and power generation can be performed even by low-speed rotation. Thus, in wind power generation in which greatly variable power of nature is used, power can be efficiently generated.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a diagram showing a combination of a front cutaway view of a power generator main unit of a power generator according to a first embodiment of the present invention, and a circuit diagram of magnetization unit;
Fig. 2 is a diagram showing the power generator main unit of the power generator in a linearly developed manner;
Fig. 3 is an equivalent circuit diagram of the power generator main unit of the power generator;
Fig. 4 is an equivalent circuit diagram of a power generator according to another embodiment of the present invention;
Fig. 5 is a diagram showing a combination of a front cutaway view of a power generator main unit of a power generator according to still another embodiment of the present invention, and a circuit diagram of an external load;
Fig. 6 is a perspective view of a field iron core according to the other embodiment;
Fig. 7 is a perspective view of a modification of the field iron core;
Fig. 8 is a diagram showing a front cutaway view of a power generator main unit of a power generator according to still another embodiment of the present invention, and a part of the circuit;
Fig. 9 is a side cutaway view of the power generator;
Fig. 10 is a side cutaway view of a wind power generator having the power generator mounted thereon;
Fig. 11 is graphs showing coil voltages and rising waveforms of interlinkage magnetic fluxes obtained through magnetic field analysis of the power generator in Figs. 8 and 9;
Fig. 12 is a diagram showing a state of magnetic fluxes obtained through magnetic field analysis of the power generator; and
Fig. 13 is a diagram showing another state of magnetic fluxes obtained through the magnetic field analysis.

### DESCRIPTION OF EMBODIMENTS

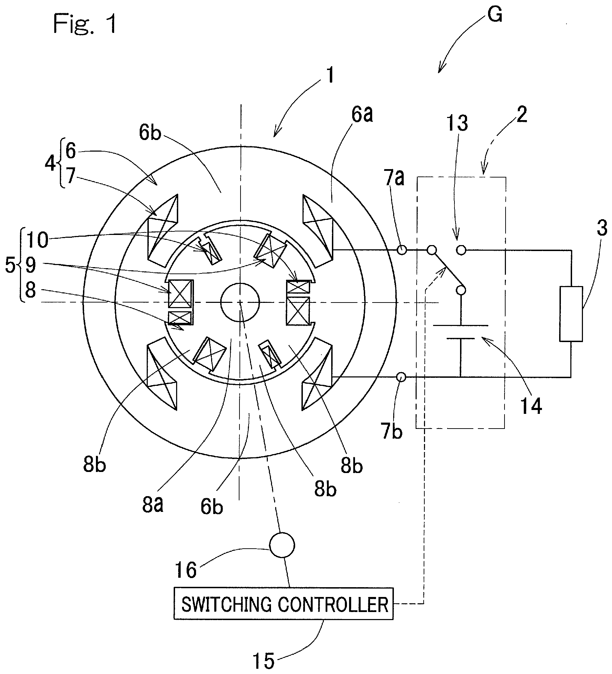

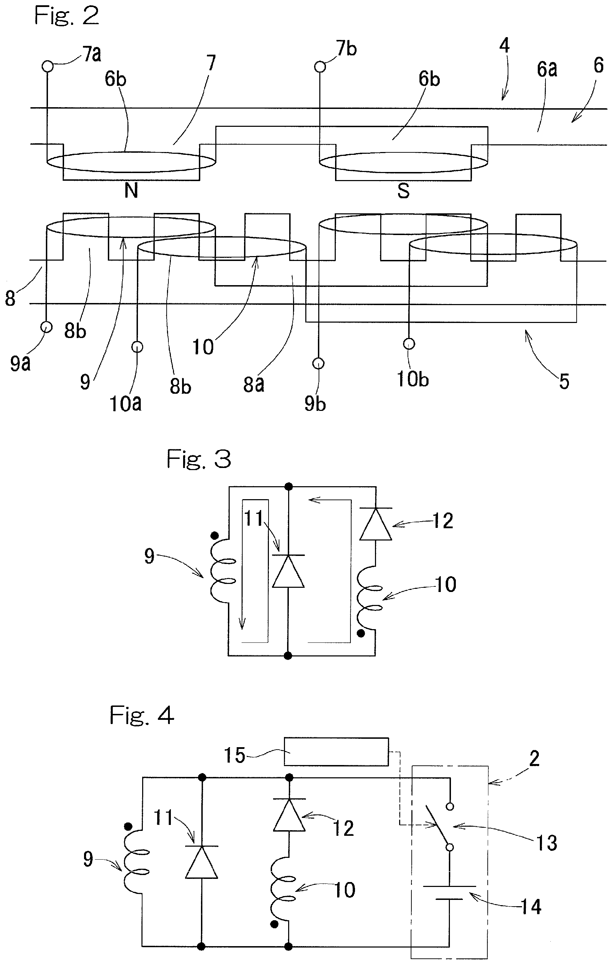

A first embodiment of the present invention is described with reference to Fig. 1 to Fig. 4. Fig. 1 is a diagram showing a combination of a front cutaway view of a power generator main unit 1 of a power generator G according to the present embodiment, and an electric circuit diagram of a magnetization unit 2 and an external load 3. Fig. 2 is a schematic view in which the power generator main unit 1 in Fig. 1 is linearly illustrated. The present embodiment is an example in which the magnetization unit 2 is employed as an initial excitation unit.

In Fig. 1, the power generator main unit 1 of the power generator G includes an annular stator 4 and a rotor 5 provided inside the stator 4 so as to be rotatable about the center of the stator 4. The stator 4 includes an output iron core 6 and output windings 7. The present embodiment is an example applied to a bipolar power generator, and the output iron core 6 has a ring-shaped yoke segment 6a provided with inwardly-projecting tooth-shaped magnetic pole segments 6b formed at two locations in the circumferential direction of the yoke segment 6a. The output windings 7 are wound around the corresponding magnetic portions 6b. As shown in Fig. 2, the output windings 7 on the corresponding magnetic pole segments 6b are connected with each other in series such that different magnetic poles appear on respective magnetic pole surfaces facing inner diameter sides of the adjacent magnetic pole segments 6b of the output iron core 6. Opposite ends of the output windings 7 form respective terminals 7a, 7b. The external load 3 is connected to the terminals 7a, 7b, as shown in Fig. 1, such that current is taken out from the power generator G to the outside.

The rotor 5 includes a field iron core 8, and main field windings 9 and auxiliary field windings 10 wound around the field iron core 8. The field iron core 8 has a core body 8a formed with a center hole and a plurality of tooth-shaped magnetic pole segments 8b protruding radially outwardly from the outer circumference of the core body 8a and arranged in the circumferential direction of the core body 8a. Three magnetic pole segments 8b are provided for each of the magnetic pole segments 6b of the output iron core 6. The main field windings 9 are each wound over two adjacent magnetic pole segments 8b, 8b. The main field windings 9 each wound over two magnetic pole segments 8b, 8b are connected with each other in series such that different magnetic poles appear on magnetic pole surfaces of a pair of adjacent magnetic poles. The auxiliary field windings 10 are each wound over two adjacent magnetic pole segments 8b, 8b, similarly to the main field windings 9, such that the phase of the auxiliary field windings 10 is shifted from the phase of the main field windings 9 by an amount corresponding to one magnetic pole segment 8b. The auxiliary field windings 10 each wound over two magnetic pole segments 8b, 8b are connected in series such that different magnetic poles appear on magnetic pole surfaces of a pair of two adjacent magnetic poles. As shown in Fig. 2, terminals 9a, 9b are formed at opposite ends of the series connection body of the main field windings 9, and terminals 10a, 10b are formed at opposite ends of the series connection body of the auxiliary field windings 10.

As shown in Fig. 3, a first rectifying element 11 is connected in parallel to the main field winding 9, and current flows through the main field winding 9 in a direction in which the first rectifying element 11 can cause current to flow. The auxiliary field winding 10 is connected in series to the main field winding 9, and a second rectifying element 12 is connected in series to the auxiliary field winding 10. Current flows through the auxiliary field winding 10 only in the same direction as current flowing through the main field winding 9. The arrows in the drawing each indicate a current flow direction.

The power generator G is a self-excitation type power generator configured to include the auxiliary field windings 10, and is provided with the magnetization unit 2 serving as an initial excitation unit, as shown in Fig. 1. A magnetization power source 14 is connected, in parallel with the external load 3, to the output windings 7 via a switching element 13. The magnetization unit 2 includes the magnetization power source 14 and the switching element 13. For example, a semiconductor switching element or a contact switch is used as the switching element 13. The magnetization power source 14 is electricity storage device such as a secondary battery or a capacitor. When the external load 3 is a secondary battery, the secondary battery may be used as the magnetization power source.

Magnetization can be performed by causing current of a predetermined magnitude to flow for an extremely short time. The degree of magnetization may be such a degree that residual magnetism required for initial excitation for start of power generation can be obtained. The degree is determined on the basis of the voltage and the magnitude of current depending on the on time of the switching element 13. An operation to open/close the switching element 13 is performed by switching controller 15. For example, the switching controller 15 monitors a signal detected by rotation detector 16 configured to detect rotation of the rotor 5, and upon detection that the rotor 5 in a still state starts to rotate, turns on the switching element 13 for a set time period required for magnetization. When a time during which rotation of the rotor 5 is stopped is short, sufficient residual magnetism remains, and thus, the switching controller 15 may perform control to turn on the switching element 13 in accordance with a set condition of, for example, turning on the switching element 13 only when rotation of the rotor 5 is started after the rotation is stopped for a set time period or longer.

In the embodiment in Fig. 1, the magnetization power source 14 is connected to the output windings 7. However, as shown in Fig. 4, the magnetization power source 14 may be connected to the main field windings 9 and the auxiliary field windings 10 via the switching element 13. Also in this case, the magnetization power source 14 is a secondary battery or a capacitor. The magnetization can be performed by causing current of a predetermined magnitude to flow for an extremely short time. Opening/closing control of the switching element 13 is performed by the switching controller 15, as in the embodiment in Fig. 1.

Operations according to the first embodiment will be described. Operations in a case where the rotor 5 rotates to generate power are described. Since the first rectifying element 11 is connected in parallel to the main field winding 9, as shown in Fig. 3, current flows through the main field windings 9 in a direction in which the first rectifying element 11 can cause current to flow. Accordingly, a magnetic flux is generated in a direction determined by current which can flow through the main field windings 9. In addition, due to electromagnetic induction, current flows in a direction of preventing reduction in magnetic flux generated in the same direction as that generated by the current, but no current flows in a direction of inhibiting increase in magnetic flux. Therefore, reduction in magnetic flux is prevented but increase in magnetic flux is not prevented. The second rectifying element 12 is connected in series to the auxiliary field winding 10, and current flows through the auxiliary field winding 10 only in the same direction as that passing through the main field winding 9.

The residual magnetism of the output iron core 6 or the field iron core 8 causes current to flow through the main field windings 9. By a magnetic flux, generated by the main field windings 9 due to the current, a magnetic flux interlinking the auxiliary field windings 10 changes so that voltage is generated at the auxiliary field windings 10. With this voltage, the auxiliary field windings 10 supply current via the main field windings 9, and current to flow through the main field windings 9 is increased. When no voltage is induced at the auxiliary field windings 10 and no current is supplied, circulation current flows through the main field windings 9 via the rectifying element 11 to maintain the magnetic flux of the main field windings 9. Current is supplied to the main field windings 9 and a magnetic flux generated by the main field windings 9 is increased, and the magnetic flux interlinking the auxiliary field windings 10 is also increased accordingly. Thus, more current is supplied to the main field windings 9. In this way, current flowing through the main field windings 9 is gradually increased, and a field magnetic flux required for power generation is generated. By the relative movement of the output iron core 6 and the field iron core 8, the interlinkage magnetic flux of the output windings 7 is changed and voltage is generated.

Power is generated during rotation of the rotor 5 as described above. However, when the rotor 5 is stopped for a certain long time, power generation cannot be started because no residual magnetism remains in both the output iron core 6 and the field iron core 8 or the residual magnetism is insufficient. Therefore, in the present embodiment, at a start of rotation after the rotor 5 is stopped, the switching element 13 of the magnetization unit 2 is turned on to cause magnetization current to flow from the magnetization power source 14 to the output windings 7. Thus, the output iron core 6 is magnetized. As described above, since a magnetic flux is gradually increased as rotation is continued, the degree of magnetization may be such a degree that residual magnetism required for initial excitation for starting power generation can be obtained. For this reason, to perform magnetization, current of a predetermined magnitude may be caused to flow for an extremely short time. By the magnetization, power generation is reliably started by a restart of rotation, even after the rotor 5 is stopped for a long time.

In the embodiment illustrated in Fig. 4, at a start of rotation after the rotor 5 is stopped, the switching element 13 of the magnetization unit 2 is turned on to cause magnetization current to flow from the magnetization power source 14 to the main field windings 9. Thus, the field iron core 8 is magnetized. Also in a case where the field iron core 8 is magnetized in this way, power generation is started even after the rotor 5 is stopped for a long time.

According to the power generator G of the aforementioned first embodiment or having the configuration illustrated in Fig. 4, the following advantages are obtained. Since the power generator G is a self-excitation type which performs excitation using the auxiliary field windings 10, power generation can be performed without requiring a permanent magnet or an external power source for supplying power for separate excitation from the outside. Since no permanent magnet is used, no cogging torque is generated, and thus, the rotor 5 can be rotated with small torque. Although the power generator G is a self-excitation type, since the magnetization unit 2 is provided which magnetizes either one of the cores of the power generator G to a degree enabling generation of a magnetic force required for initial excitation in power generation, power generation can be reliably started even after stop of rotation or disassembly for maintenance, and further even when the rotational speed is low. Although the magnetization unit 2 is required, the magnetization unit 2 only needs to perform magnetization to a degree enabling generation of a magnetic force required for initial excitation in power generation. Thus, the magnetization unit 2 may be significantly smaller than external power sources for separately-excited type power generators.

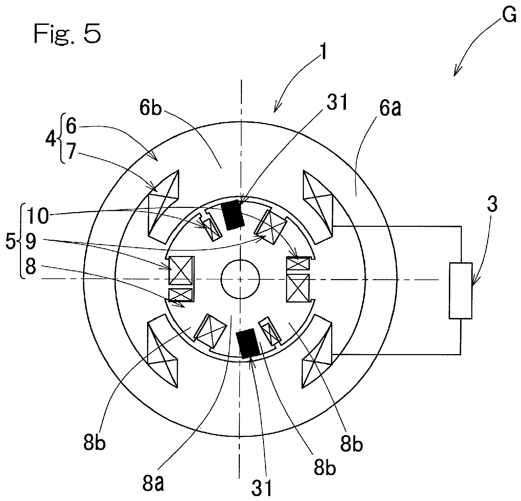

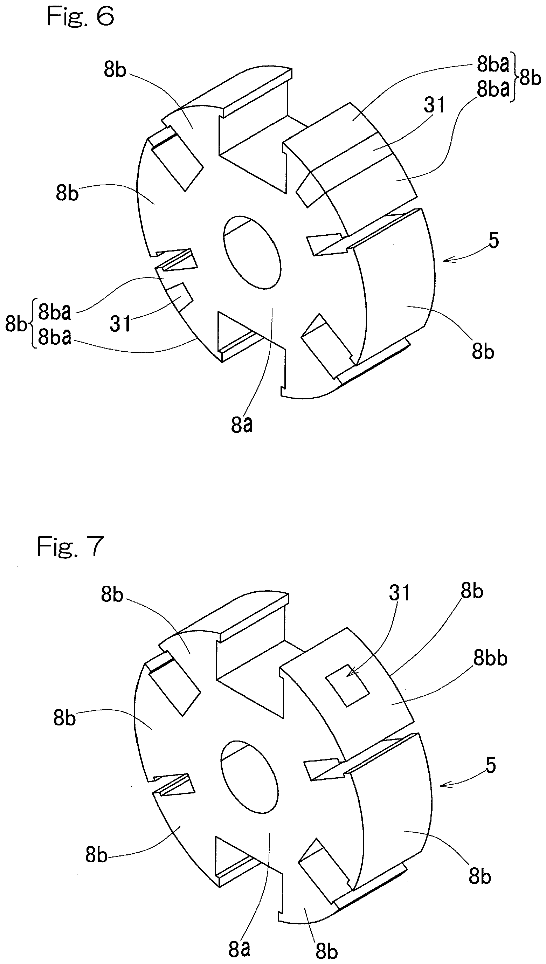

Fig. 5 and Fig. 6 illustrate still another embodiment of the present invention. The present embodiment is an example in which an initial excitation magnet 31 is provided as the initial excitation unit in place of the magnetization unit 2 in the first embodiment shown in Fig. 1 to Fig. 3. As shown in Fig. 5, the initial excitation magnet 31 is embedded in the field iron core 8. The initial excitation magnet 31 is a permanent magnet which generates a magnetic force required for initial excitation in power generation, and is as small in size as possible within a range considering a margin for reliably generating a magnetic force required for initial excitation. For example, ferrite magnets which are less expensive than rare earth magnets may be used as the initial excitation magnets 31. The direction of magnetic fluxes generated by the initial excitation magnets 31 is the same as that generated by excitation current flowing through the main field windings 9. In the present embodiment, the number of the initial excitation magnets 31 is two, which is the same as the number of the magnetic pole segments 6b of the output iron core 6, but the number of the initial excitation magnets 31 may be one. Alternatively, when the number of the magnetic pole segments 6b of the output iron core 6 is four, eight, or sixteen, the number of the initial excitation magnets 31 may be two, or may correspond to the number of the magnetic poles.

As in the example illustrated in Fig. 6, the initial excitation magnet 31 is provided over the entire thickness in the axial direction of the projecting magnetic pole segments 8b of the field iron core 8. In other words, each of the magnetic pole segments 8b of the field iron core 8 is divided into two divided magnetic pole segments 8ba, 8ba arranged adjacent to each other in the circumferential direction, and the initial excitation magnets 31 are each interposed between the two divided magnetic pole segments 8ba, 8ba.

Alternatively, as shown in Fig. 7, the initial excitation magnet 31 may be embedded in surface 8bb, of the magnetic pole segments 8b of the field iron core 8, facing the output iron core 6. In the example shown in Fig. 7, the initial excitation magnet 31 is embedded in the center of the corresponding facing surface 8bb of the magnetic pole segment 8b.

Operations of the power generator G according to the present embodiment are described. Operations of the power generator G during continuous rotation are identical to those in the first embodiment, and the explanation thereof is omitted. In the present embodiment, as in the aforementioned embodiment, power generation is performed during rotation of the rotor 5. However, if the rotor 5 is stopped for a certain long time, power generation cannot be started because no residual magnetism remains in both the output iron core 6 and the field iron core 8 or the residual magnetism is insufficient. Therefore, in the present embodiment, the initial excitation magnets 31 are provided. By magnetic fluxes generated by the initial excitation magnets 31, power generation can be reliably started by restart of rotation even after the rotor 5 is stopped for a long time.

According to the power generator G having this configuration, the following advantages can be obtained. Since the power generator G is a self-excitation type which performs excitation using the auxiliary field windings 10, power generation can be performed without requiring a permanent magnet for power generation or an external power source for supplying power for separate excitation from the outside. Since no permanent magnet for power generation is used, no cogging torque is generated, and thus, the rotor 5 can be rotated with small torque. Although the power generator G is a self-excitation type, since the initial excitation magnets 31 are provided in the field iron core 8, power generation can be reliably started even after stop of rotation or disassembly for maintenance, and further even when the rotational speed is low.

Although the initial excitation magnets 31 are provided, an extremely small magnetic force is enough for initial excitation because a magnetic flux increases with rotation in a self-excitation power generator, as described above. Since the initial excitation magnets 31 are permanent magnets which generate such small magnetic forces required for initial excitation, the permanent magnets may be ones which generate a magnetic force much weaker than permanent magnets that provide ordinary generation power. Accordingly, expensive rare metal is not needed, an inexpensive material such as ferrite magnets is enough, small magnets are enough, and the cogging torque does not become a practical problem. The present embodiment is improvement in a self-excitation type power generator, and thus, can be easily put into practical use, unlike a reluctance power generator.

In the aforementioned embodiments, the output iron core 6 is on the stator 4 side and the field iron core 8 is on the rotor 5 side. However, the field iron core 8 may be on the stator 4 side and the output iron core 6 may be on the rotor 5 side. Further, a bipolar power generator is provided in the aforementioned embodiments. However, a multipolar power generator including four poles, eight poles, or sixteen poles, etc. may be used.

In the aforementioned embodiments, the magnetization unit 2 or the initial excitation magnets 31 are provided as initial excitation unit. Alternatively, as the initial excitation unit, means (not illustrated) may be provided which does not perform magnetization but applies current to any of the windings 7, 8, and 9 only for a predetermined time in the initial stage of rotation, such that a magnetic force required for initial excitation in power generation is generated in one or both of the output iron core 6 and the field iron core 8.

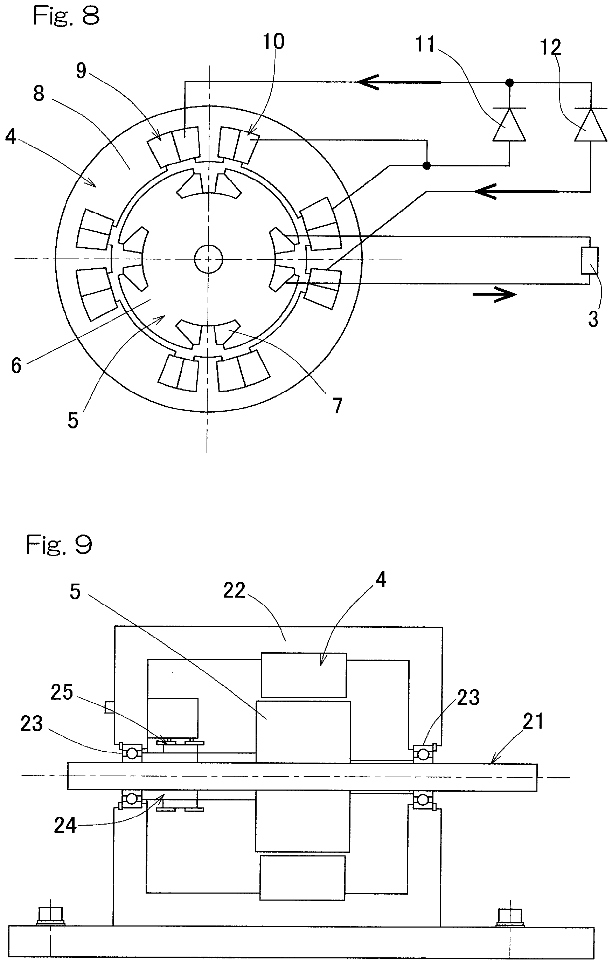

Fig. 8 illustrates an example of a quadrupolar power generator in which the field iron core 8 is on the stator 4 side and the output iron core 6 is on the rotor 5 side. Since the principle is same as that in the first embodiment, corresponding components are denoted by the same reference numerals and the explanation thereof is omitted. Illustration of the initial excitation unit is omitted. The initial excitation unit may be the magnetization unit 2 or may be the initial excitation magnets 31. When the initial excitation magnets 31 are used, the initial excitation magnets 31 are provided on the stator 4 side in the present embodiment.

As shown in Fig. 9, the rotor 5 is attached to a shaft 21, and is rotatably supported together with the shaft 21, by a bearing 23, with respect to a frame 22. The stator 4 is fixed to the frame 22. The output winding of the rotor 5 is taken out to the stator side via a slip ring 24 and a brush 25.

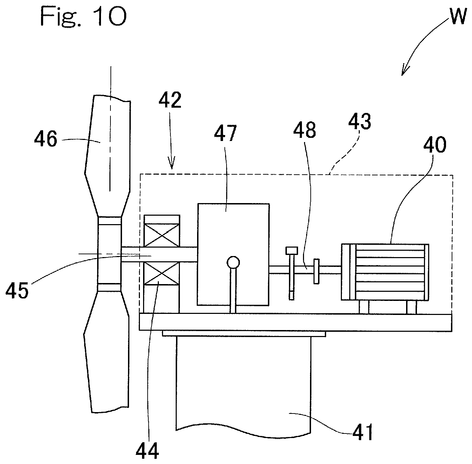

Fig. 10 is a cutaway side view of a wind power generator W having mounted thereon, as a power generator for wind power generation, the power generator G according to the embodiment in Fig. 1 or Fig. 4, or according to any one of the embodiments in Fig. 5 to Fig. 8. In the wind power generator W, a nacelle 42 is provided in a horizontally turnable manner on a support base 41. In a casing 43 of the nacelle 42, a main shaft 45 is rotatably supported by a bearing 44. A blade (wind turbine) 46 which is a swirler is attached to an end of the main shaft 45 projecting to the outside of the casing 43. The other end of the main shaft 45 is connected to a speed increaser 47. An output shaft 48 of the speed increaser 47 is coupled with the rotor shaft of the power generator G serving as a power generator for wind power generation. Accordingly, the rotor of the power generator G is rotationally driven by the blade 46.

As a result of using the power generator G as a power generator for wind power generation in this way, rotation can be started even with small torque, and power generation can be performed even when the rotational speed is low. Thus, in wind power generation using greatly variable power of nature, power can be efficiently generated.

The power generator G according to any one of the aforementioned embodiments can be used for power generation using various energy sources including power generation using flowing water, and power generation using other power of nature, as well as wind power generation.

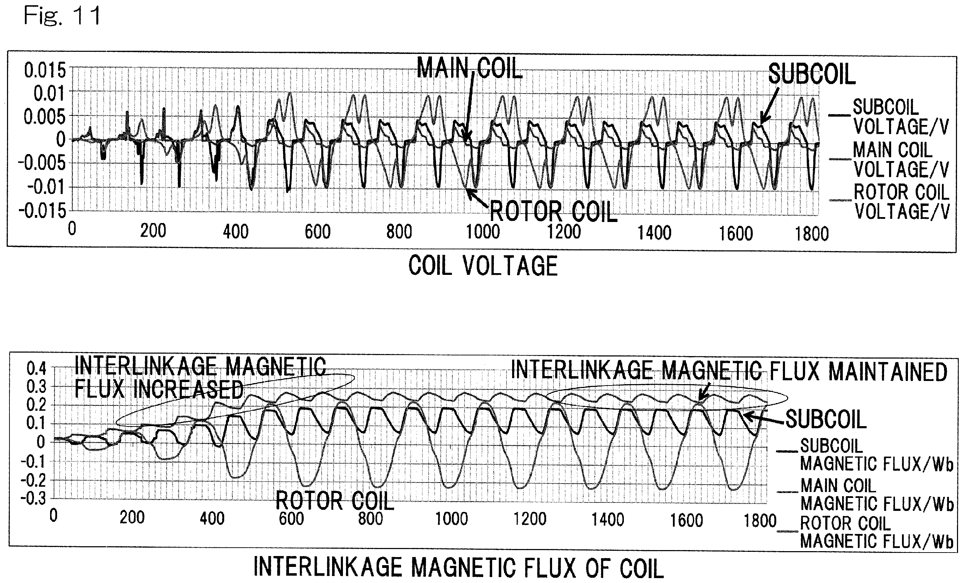

Fig. 11 to Fig. 13 show the results of the test production and magnetic field analysis of a power generator having the configurations shown in Fig. 8 and Fig. 9.

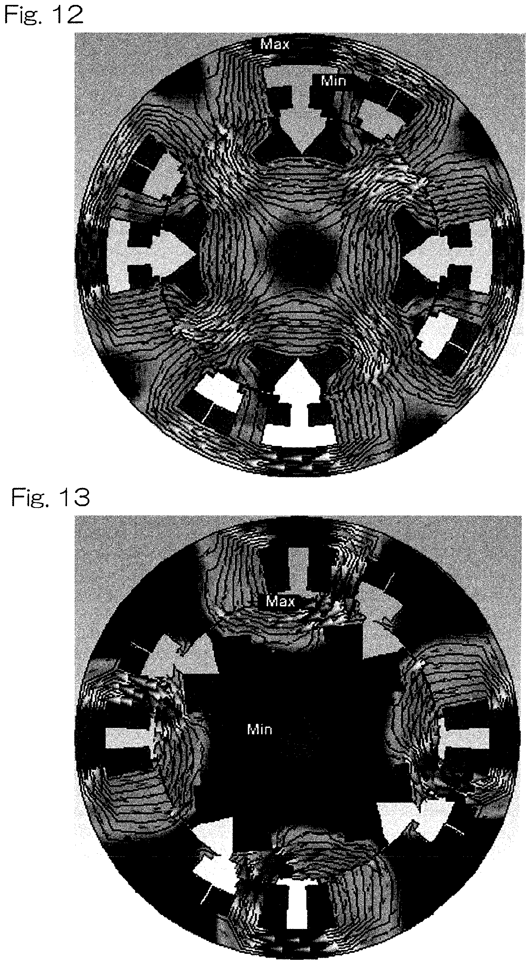

Fig. 11 shows the coil voltages and the rising waveforms of interlinkage magnetic fluxes, obtained through the magnetic field analysis. Fig. 11 shows the state in which the interlinkage magnetic flux of a main coil gradually increases. The "main coil" in the drawing corresponds to the "main field winding 9" of the embodiments, and a "subcoil" in the drawing corresponds to the "auxiliary field winding 10" of the embodiments. A "rotor coil" in the drawing corresponds to "the output winding 7". From Fig. 12 and Fig. 13, change in the magnetic flux densities of the components, caused by rotation of the rotor 5 can be seen.

### [Reference Numerals]

- 1 ····: Power generator main unit
- 2 ····: Magnetization unit (Initial excitation unit)
- 3 ····: External load
- 4 ····: Stator
- 5 ····: Rotor
- 6 ····: Output iron core
- 6a ····: Yoke segment
- 6b ····: Magnetic pole segment
- 7 ····: Output winding
- 8 ····: Field iron core
- 8a ····: Core body
- 8b ····: Magnetic pole segment
- 9 ····: Main field winding
- 10 ····: Auxiliary field winding
- 11 ····: First rectifying element
- 12 ····: Second rectifying element
- 13 ····: Switching element
- 14 ····: Magnetization power source
- 15 ····: Switching controller
- 16 ····: Rotation detector
- 31 ····: Initial excitation magnet (Initial excitation unit)
- G ····: Power generator
- W ····: Wind power generator

## Claims

1. A power generator, comprising:
an output iron core having an output winding wound therearound; and
a field iron core having a main field winding and an auxiliary field winding wound therearound,
the power generator being a self-excitation type in which one of the output iron core and the field iron core serves as a stator and the other serves as a rotor, the main field winding is connected to a first rectifying element, the auxiliary field winding is connected to a second rectifying element, and power is generated by relative rotation of the stator and the rotor,
wherein the power generator is provided with an initial excitation unit configured to apply, to one or both of the output iron core and the field iron core, a magnetic force to a degree required for initial excitation in power generation.

2. The power generator as claimed in claim 1, wherein the initial excitation unit is a magnetization unit configured to magnetize one or both of the output iron core and the field iron core to a degree enabling generation of a magnetic force required for initial excitation in power generator.

3. The power generator as claimed in claim 2, wherein the magnetization unit is configured to apply a magnetization current to any of the output winding, the main field winding, and the auxiliary field winding.

4. The power generator as claimed in claim 3, wherein the magnetization current is a direct current.

5. The power generator as claimed in claim 3, wherein the magnetization current is a pulse current.

6. The power generator as claimed in any one of claims 3 to 5, wherein the magnetization unit includes:
a magnetization power source in the form of a secondary battery or a capacitor; and
a switching element interposed either between the magnetization power source and the output winding to which the magnetization current is applied, or between the magnetization power source, and the main field winding and the auxiliary field winding to which the magnetization current is applied.

7. The power generator as claimed in claim 1, wherein the initial excitation unit is an initial excitation magnet formed of a permanent magnet which is provided in the field iron core and is configured to generate a magnetic force required for initial excitation in power generation.

8. The power generator as claimed in claim 7, wherein the initial excitation magnet is embedded in a surface, on a magnetic pole segment of the field iron core, facing the output iron core.

9. The power generator as claimed in claim 7, wherein the initial excitation magnet is embedded between adjacent magnetic pole segments of the field iron core.

10. The power generator as claimed in any one of claims 7 to 9, wherein the direction of a magnetic flux generated by the initial excitation magnet provided in the field iron core generates is same as the direction of a magnetic flux generated by excitation current flowing through the main field winding.

11. The power generator as claimed in any one of claims 1 to 10, wherein the power generator is configured as a power generator for wind power generation, in which the rotor is rotationally driven by a wind turbine.
